# EUROPÄISCHE PATENTSCHRIFT

(11) **EP 0 837 279 B1**
(45) Veröffentlichungstag und Bekanntmachung des Hinweises auf die Patenterteilung: **26.09.2001**
(21) Anmeldenummer: 97116209.4
(22) Anmeldetag: 18.09.1997
(51) Int. Cl.: F16L 55/04, F16L 55/033

(54) **Pulsationstilger**
Pulsation damper
Amortisseur de vibrations

(30) Priorität: 21.10.1996 DE 19643327
(43) Veröffentlichungstag der Anmeldung: 22.04.1998
(73) Patentinhaber: ROBERT BOSCH GMBH, 70442 Stuttgart (DE)
(72) Erfinder: Dworak, Wilhelm, Ing., 70437 Stuttgart (DE); Aichele, Hans, Dipl.-Ing., 70499 Stuttgart (DE); Steudel, Wolfgang, Dipl.-Ing. (FH), 74321 Bietigheim-Bissingen (DE); Winkes, Georg-Alois-Hermann, 71282 Hemmingen (DE); Sacha, Bernhard, Dipl.-Ing., 74354 Besigheim (DE); Bredenfeld, Guido, Dipl.-Ing., 71706 Markgroeningen (DE); Klemd, Olaf, Dipl.-Ing., 71706 Markgroeningen (DE); Steprath, Werner, Dipl.-Ing. (FH), 41542 Dormagen (DE)

(56) Entgegenhaltungen:
- DE-U- 9 417 839
- US-A- 4 000 758
- US-A- 4 712 584
- US-A- 5 363 744

## Beschreibung

### Stand der Technik

Die Erfindung geht von einem Pulsationstilger entsprechend dem Oberbegriff des Anspruchs 1 aus.

Derartige Pulsationstilger werden u.a. in Hydraulikkreisen zur Minderung von Druck- oder Volumenstrom-Pulsationen eingesetzt, die von den darin verwendeten Verdrängerpumpen aufgrund ihres Arbeitsprinzips erzeugt werden. Die Pulsationstilger, die hierzu unmittelbar dem Druckauslaß der Verdrängerpumpen nachgeschaltet sind, werden entweder direkt in das Pumpengehäuse integriert oder werden als separate Bauteile an die Pumpen angebaut bzw. extern dazu angeordnet. Für eine preisgünstige Herstellung in einem Druckgußverfahren erfordern die Tilgerkammern herkömmliche Pulsationstilger große Öffnungen, die von entsprechenden Deckeln verschlossen werden. Diese Deckel sind aufgrund ihrer druckbeaufschlagten Fläche nur durch schwere und aufwendige Befestigungselemente zu sichern.

Ein separater und an eine Radialkolbenpumpe in Exzenterbauweise direkt angebauter Pulsationstilger ist in der Figur 1 der DE 37 12 412 A1 dargestellt. Dieser Pulsationstilger besteht aus einem einteiligen Gehäuse, das über seine Flanschfläche auf nicht dargestellte Weise mit dem Gehäuse der Radialkolbenpumpe verbunden ist. Die Flanschfläche des Pulsationstilgers erzeugt dabei eine Hinterschneidung, die die Herstellungskosten des Gehäuses verteuert. Die im Tilgerraum pulsierenden Druckkräfte des Förderstroms der Radialkolbenpumpe belasten das Gehäuse aufgrund der einteiligen Ausbildung im wesentlichen mit einer pulsierenden Zugspannung in axialer und tangentialer Richtung des Pulsationstilgers. Um die notwendige Standfestigkeit des Gehäuses zu erreichen ist daher eine relativ dick dimensionierte Wandstärke, bzw. eine Einschränkung der Größe der druckbelasteten Flächen und damit der Dämpfungseigenschaften des Pulsationstilgers erforderlich.

### Vorteile der Erfindung

Demgegenüber weist der erfindungsgemäße Pulsationstilger den Vorteil auf, daß sein Gehäuse zweiteilig, nämlich aus einem Zentralelement und einem Mantel, aufgebaut ist. Diese Ausbildung verhindert, daß der Mantel neben einer Tangentialspannung noch mit einer Axialspannung beaufschlagt wird. Dies wird durch kraftfreie Verbindungsstellen zwischen dem Mantel und dem Zentralelement erreicht. Außerdem treten dadurch am Mantel keine dessen Standfestigkeit vermindernden Kerbspannungen auf. Dies ermöglicht eine relativ dünnwandige Ausführung des Mantels. Dessen Stabilität wird in einer besonderen Ansführung der Erfindung die nicht beansprucht ist, durch einen kreisförmigen Querschnitt zusätzlich unterstützt, wodurch sich ferner die Möglichkeit bietet als Mantel handelsübliche und als Massenware preisgünstig erhältliche Rohre einzusetzen.

Zudem kann das Zentralelement dieses Pulsationstilgers kraftfluß- und fertigungsgerecht ausgebildet sein indem es große Öffnungen und keine Hinterschneidungen aufweist. Das Zentralelement läßt sich deshalb in einem Druckgußverfahren fertigen. Eine anschließende spanende Bearbeitung kann somit entfallen, so daß das Zentralelement ebenfalls relativ preiswert herzustellen ist. Die Verbindung zwischen dem Boden und dem Deckel des Zentralelements mittels Säulen erlaubt schließlich die Ausbildung von Ausnehmungen, die sich zur Aufnahme der Befestigungsmittel eignen, mittels denen der Pulsationstilger beispielsweise mit dem Gehäuse einer Verdrängerpumpe koppelbar ist. Diese Befestigungsmittel sind von außen jederzeit zugänglich und erlauben eine einfache Montage bzw. Demontage. Durch ihre Anordnung werden die Befestigungsmittel nicht von den pulsierenden hydraulischen Kräften aus dem Tilgerraum belastet. Die Ausnehmungen in den Hohlsäulen des Zentralelements sind vom Tilgerraum vollständig abgetrennt, so daß auf eine Abdichtung der Befestigungsmittel verzichtet werden kann.

Weitere Vorteile oder vorteilhafte Weiterbildungen der Erfindung ergeben sich aus den Unteransprüchen oder der Beschreibung.

### Zeichnung

Ein Ausführungsbspiel der Erfindung ist in der Zeichnung dargestellt und in der folgenden Beschreibung näher erläutert.

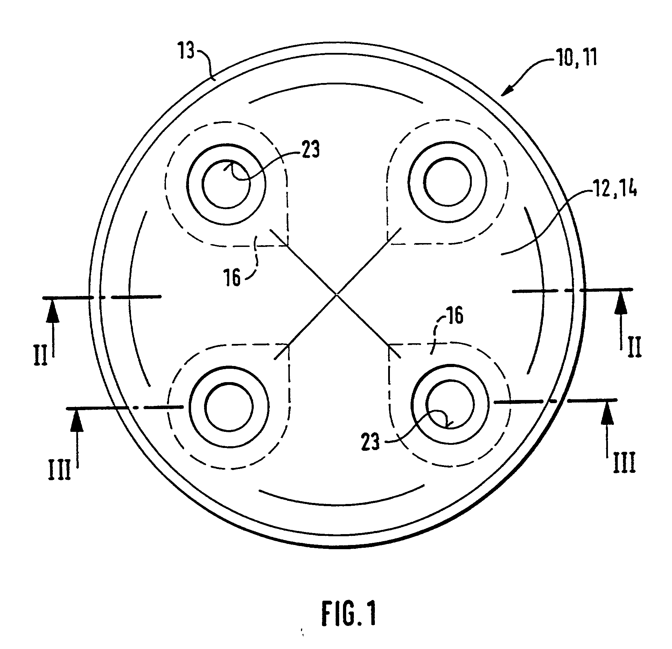

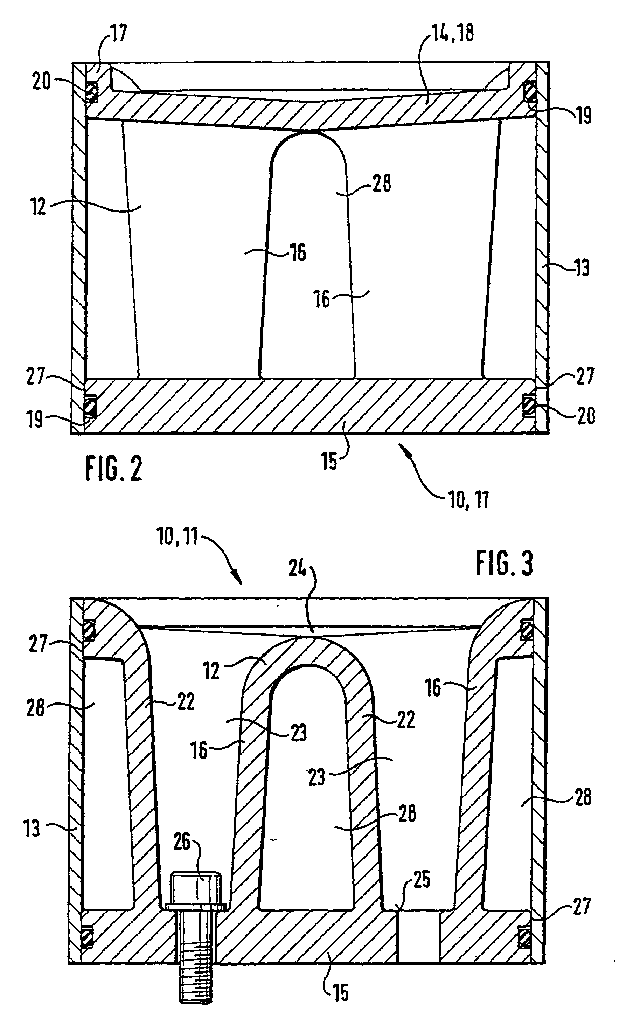

Fig.1 zeigt den Pulsationstilger in einer Draufsicht, Fig.2 einen Längsschnitt durch den Pulsationstilger entlang der Linie II-II und Fig.3 einen ebensolchen entlang der Linie III-III nach Fig.1.

### Beschreibung des Ausführungsbeispiels

Der in den Figuren 1 bis 3 dargestellte Pulsationstilger 10 hat ein Gehäuse 11, das im wesentlichen aus einem Zentralelement 12 und einem Mantel 13 gebildet wird. Gemäß den Figuren 2 und 3 besteht das Zentralelement 12 aus einem scheibenförmigen Deckel 14, und einem ebenfalls scheibenförmigen Boden 15. Auf dem Boden 15 sind mehrere konische Hohlsäulen 16 angeordnet. Durch die Hohlsäulen 16 sind der Boden 15 und der Deckel 14 miteinander zu einem Einzelbauteil verbunden. Die Wandungsstärken und die Wandungsverläufe des Zentralelements 12 sind dabei auf dessen Herstellung in einem Druckgußverfahren abgestimmt.

Der Boden 15 des Zentralelements 12 entspricht in seinem Außendurchmesser dem des Deckels 14; seine Wandstärke ist gegenüber der des Deckels 14 verdickt ausgebildet. Die Außenfläche des Bodens 15 ist plan ausgeführt.

Der Deckel 14 hat eine umlaufende Kante 17 und ein gegenüber dieser Kante 17 zurückgesetztes Mittelteil 18.

Der Deckel 14 besteht aus vier Gewölben 24, die sich in seinem Zentrum zu einem Kreuzgewölbe durchdringen und dabei das Mittelteil 18 bilden.

Am Außenumfang von Boden 15 und und Deckel 14 ist jeweils eine umlaufenden Nut 19 ausgebildet. Diese Nuten 19 dienen der Aufnahme jeweils eines Dichtungselements 20.

Die den Boden 15 mit dem Deckel 14 verbindenden konischen Hohlsäulen 16 haben zur Vermeidung von Hinterschnitten in der Druckgußform einen tropfenförmigen Querschnitt. Die Hohlsäulen 16 begrenzen mit ihren inneren Wandungen 22 Ausnehmungen 23, die sich im Boden 15 und im Deckel 14 bis zu deren Außenflächen fortsetzen. Die somit in Längsrichtung des Pulsationstilgers 10 durchgehend verlaufenden Ausnehmungen 23 weisen im Bereich des Deckels 14 sich durchdringende Gewölbe 24 auf. Im Bereich des Bodens 15 sind die Ausnehmungen 23 einmal nach innen abgesetzt, so daß ein als Schraubflansch wirkender rechwinkliger Absatz 25 entsteht. Zur Fixierung des Pulsationstilgers 10 an einer Befestigungsfläche - beispielsweise am Gehäuse einer Verdrängermaschine - lassen sich Befestigungselemente 26, insbesondere Schrauben, verwenden. Die von den Ausnehmungen 23 aufgenommenen Schrauben sind dabei so in die Ausnehmungen 23 einzuführen, daß deren Schaft, bei auf dem Schraubflansch aufliegendem Schraubenkopf, aus dem Boden 15 herausragt. Die plan ausgeführte Außenfläche des Bodens 15 des Zentralelements 12 wirkt im angebauten Zustand als Auflage für den Pulsationstilger 10.

Umfangsseitig ist das Zentralelement 12 von einem hülsenförmigen dünnwandigen Mantel 13 umschlossen. Als Mantel 13 kann beispielsweise ein als Massenware erhältliches Rohr eingesetzt werden. Der Innendurchmesser des Mantels 13 ist auf den Außendurchmesser des Zentralelements 12 abgestimmt, so daß der Mantel 13 sich in Längsrichtung auf das Zentralelement 12 aufschieben läßt. Zwischen dem Mantel 13 und dem Zentralelement 12 entstehen dabei keine kraftschlüssigen Verbindungsstellen 27, die bei einer Druckbeaufschlagung des Mantels 13 negative Wirkungen hervorrufen könnten. Die von den Dichtungselementen 20 nach außen abgedichteten Verbindungsstellen 27 sind somit frei von Kräften. Die Axialkräfte zwischen dem Boden 15 und dem Deckel 14 werden von den Hohlsäulen 16 aufgenommen.

Dementsprechend schließt das Gehäuse 11 des Pulsationstilgers Dementsprechend schließt das Gehäuse 11 des Pulsationstilges 10 einen nach außen abgedichteten Tilgerraum 28 ein. Dieser Tilgerraum 28 ist relativ großvolumig ausgebildet und wird von den Hohlsäulen 16, deren Ausnehmungen 23 durch ihre Wandungen 22 vom Tilgerraum 28 abgetrennt sind, durchdrungen. Mit Hilfe von nicht erkennbaren Zu- bzw. Abläufen, die im Boden 15 bzw im Deckel 14 des Zentralelements 12 ausgebildet sind, läßt sich der Tilgerraum 28 zwischen den Druckauslaß einer Verdrängermaschine und den Arbeitsanschluß eines hydraulischen Verbrauchers - beide Aggregate sind in den Zeichnungen nicht dargestellt - schalten.

Das Volumen des Tilgerraums 28 beträgt ein Vielfaches dessen, was von der Verdrängermaschine pro Zeiteinheit gefördert wird und wirkt als elastische Aufnahme für die Volumenstrompulsation und als Reflexionsschalldämpfer. Ein hydraulischer Verbraucher kann somit mit einem kontinuierlichen und im Druckniveau nur gering schwankenden Förderstrom bei relativ geringen Strömungsgeräuschen im Hydraulikkreis versorgt werden.

Weiterhin sei die Fixierung eines Pulsationstilgers 10 mit einer unterschiedlich großen Anzahl bzw. einer unterschielichen Anordnung von Befestigungselementen 26 in einer entsprechenden Zahl von Hohlsäulen 16 erwähnt. Im beschriebenen Ausführungsbeispiel sind dazu vier Hohlsäulen 16 dargestellt, es ist jedoch auch eine Zentralbefestigung mit nur einem bzw mit drei oder mehr Befestigungselementen 26 möglich.

Ebenso vorstellbar ist es, daß eine weitere Verbesserung der Dämpfungseigenschaften des Pulsationstilgers 10 durch eine optimierte elastischere Formgebung des Bodens 15 bzw. des Deckels 14 erreichbar ist. Auch eine Herstellung des Zentralelements 12 aus Kunststoff ist denkbar.

## Patentansprüche

1. Pulsationstilger (10), insbesondere für den Einsatz in Hydraulikkreisen, mit einem Gehäuse (11), bestehend aus einem Boden (15), einem Mantel (13) und einem Deckel (14), das einen nach außen abgedichteten und einen Zulauf bzw. einen Ablauf für ein Druckmedium aufweisenden Tilgerraum (28) begrenzt, **dadurch gekennzeichnet, daß** das Gehäuse (11) zweiteilig ausgebildet ist, wobei der Boden (15) und der Deckel (14) miteinander zu einem einzelnen Zentralelement (12) zusammengefaßt sind, das umfangsseitig von dem separaten Mantel (13) umschlossen ist, wobei zwischen dem Zentralelement (12) und dem Mantel (12) kraftfreie Verbindungsstellen (27) ausgebildet sind.

2. Pulsationstilger (10) nach Anspruch 1, **dadurch gekennzeichnet, daß** das Zentralelement (12) wenigstens eine durchgehende, parallel zur Mittelachse verlaufende und gegenüber dem Tilgerraum (28) durch eine Wandung (22) abgetrennte Ausnehmung (23) aufweist.

3. Pulsationstilger (10) nach Anspruch 2, **dadurch gekennzeichnet, daß** die Wandung (32) auf ihrer der Ausnehmung (23) zugewandten Seite wenigstens einmal abgesetzt ist.

4. Pulsationstilger (10) nach einem der Ansprüche 1 bis 3, **dadurch gekennzeichnet, daß** das Zentralelement (12) aus Druckguß hergestellt ist.

5. Pulsationstilger (10) nach einem der Ansprüche 1 bis 4, **dadurch gekennzeichnet, daß** der Mantel (13) ein Rohr ist.

6. Pulsationstilger (10) nach einem der Ansprüche 1 bis 5, **dadurch gekennzeichnet, daß** an den Verbinungsstellen (27) zwischen Zentralelement (12) und Mantel (13) jeweils wenigstens ein Dichtungselement (20) vorhanden ist.

## Claims

1. Pulsation damper (10), in particular for use in hydraulic circuits, having a housing (11) which comprises a base (15), a casing (13) and a cover (14) and binds a damper chamber which is sealed in the outward direction and has an inflow and an outflow for a pressure medium, **characterized in that** the housing (11) is designed in two parts, the base (15) and the cover (14) being combined with one another to form a single central element (12) which is enclosed circumferentially by the separate casing (13), force-free connecting locations (27) being formed between the central element (12) and the casing (13).

2. Pulsation damper (10) according to Claim 1, **characterized in that** the central element (12) has at least one through-passage (23) which runs parallel to the centre axis and is separated off from the damper chamber (28) by a wall (22).

3. Pulsation damper (10) according to Claim 2, **characterized in that**, on its side which is directed towards the passage (23), the wall (22) is offset at least once.

4. Pulsation damper (10) according to one of Claims 1 to 3, **characterized in that** the central element (12) is produced by die casting.

5. Pulsation damper (10) according to one of Claims 1 to 4, **characterized in that** the casing (13) is a tube.

6. Pulsation damper (10) according to one of Claims 1 to 5, **characterized in that** in each case at least one sealing element (20) is provided at the connecting locations (27) between the central element (12) and casing (13).

## Revendications

1. Amortisseur de vibrations (10) notamment applicable à des circuits hydrauliques, comprenant un boîtier (11) formé d'un fond (15), d'une enveloppe (13) et d'un couvercle (14) qui délimitent une chambre d'amortissement (28) pour le fluide sous pression, cette chambre étant rendue étanche vis-à-vis de l'extérieur et ayant une entrée et une sortie,
**caractérisé en ce que**
le boîtier (11) est en deux parties comprenant le fond (15) et le couvercle (14) qui sont réunis à un unique élément central (12) entouré à sa périphérie par une enveloppe distincte (13), et entre l'élément central (12) et l'enveloppe (13), on a des points de liaison (27) sans transmission de force.

2. Amortisseur de vibrations (10) selon la revendication 1,
**caractérisé en ce que**
l'élément central (12) comporte au moins une cavité (23) continue, parallèle à l'axe central et séparée par une cloison (22) par rapport à la chambre d'amortissement (28).

3. Amortisseur de vibrations (10) selon la revendication 2,
**caractérisé en ce que**
la cloison (22) est décrochée au moins une fois sur son côté tourné vers la cavité (23).

4. Amortisseur de vibrations (10) selon l'une quelconque des revendications 1 à 3,
**caractérisé en ce que**
l'élément central (12) est obtenu par injection.

5. Amortisseur de vibrations (10) selon l'une quelconque des revendications 1 à 4,
**caractérisé en ce que**
l'enveloppe (13) est un tube.

6. Amortisseur de vibrations (10) selon l'une quelconque des revendications 1 à 5,
**caractérisé en ce qu'**
il est prévu au moins un joint d'étanchéité (20) au niveau des points de liaison (27) entre l'élément central (12) et l'enveloppe (13).
